Europäisches Patentamt

European Patent Office

Office européen des brevets

(19)

(11) Veröffentlichungsnummer: **0 116 925**

**A2**

(12) **EUROPÄISCHE PATENTANMELDUNG**

(21) Anmeldenummer: **84101427.7**

(22) Anmeldetag: **11.02.84**

(51) Int. Cl.³: **H 02 J 7/02**
**H 02 M 7/537**

(30) Priorität: **16.02.83 DE 3305224**

(43) Veröffentlichungstag der Anmeldung:
**29.08.84 Patentblatt 84/35**

(84) Benannte Vertragsstaaten:
**DE FR GB IT**

(71) Anmelder: **BROWN, BOVERI & CIE Aktiengesellschaft**
**Kallstadter Strasse 1**
**D-6800 Mannheim 31(DE)**

(72) Erfinder: **Kahlen, Hans, Dr. Dipl.-Ing.**
**Holbeinstrasse 11**
**D-6940 Weinheim(DE)**

(72) Erfinder: **Bergmann, Lutz, Dipl.-Ing.**
**Benzstrasse 5**
**D-6840 Lampertheim(DE)**

(74) Vertreter: **Kempe, Wolfgang, Dr. et al,**
**c/o Brown, Boveri & Cie AG Postfach 351**
**D-6800 Mannheim 1(DE)**

(54) Bord-Batterieladegerät.

(57) Das Bord-Batterieladegerät dient zum Laden der Hauptbatterie eines Elektrospeicher-Straßenfahrzeuges aus einem Wechselspannungsnetz während des Stillstandes des Fahrzeuges, wobei ein sinusförmiger Strom mit einem Leistungsfaktor von 1 aus dem Netz entnommen werden soll. Hierzu sind ein netzseitiges Hochfrequenzfilter (1), ein Netzgleichrichter (2), ein Hochsetzgleichstromsteller (3), ein kapazitiver Zwischenspeicher (4), ein Wechselrichter (5) ein Batteriegleichrichter (6) und ein batterieseitiger Hochfrequenzfilter (7) vorgesehen. Der Wechselrichter (5) enthält vorzugsweise zwei im Gegentakt mit hoher Frequenz betriebene Leistungstransistoren ($T_2$, $T_3$). Zur Versorgung des Fahrzeug-Bordnetzes aus der Hauptbatterie während der Fahrt, wird die Hauptbatterie direkt an den kapazitiven Zwischenspeicher angeschlossen. Zur Spannungsanpassung kann zwischen Wechselrichter (5) und Batteriegleichrichter (6) ein Spartransformator vorgesehen sein.

EP 0 116 925 A2

./...

Croydon Printing Company Ltd.

Fig.1

0116925

BROWN , BOVERI & CIE    AKTIENGESELLSCHAFT
Mannheim                                11. Febr. 1983
Mp.-Nr. 510/83                           ZPT/P3-Pn/Bt

Bord-Batterieladegerät

Die Erfindung bezieht sich auf ein Bord-Batterieladegerät gemäß dem Oberbegriff des Anspruchs 1.

Ein solches Bord-Batterieladegerät ist beispielsweise
aus der DE-OS 31 04 965 und der DE-OS 31 16 341 bekannt.
Beim Gleichstrompulswandler gemäß DE-OS 31 04 965 ist
dabei dem Hochsetzgleichstromsteller ein Tiefsetzgleichstromsteller zur Anpassung der Netzwechselspannung auf
die niedrigere Batteriespannung nachgeschaltet.

Beim Elektrospeicher-Straßenfahrzeug gemäß DE-OS
31 16 341 wird der für den fremderregten Gleichstrommotor des Fahrzeuges vorgesehene Feldstromsteller als
Hochsetzsteller zur Ladung der Batterie eingesetzt. Um
eine Nebenaggregate-Batterie aus der Leistungsbatterie
während des Fahrbetriebes zu laden, ist ein Ladewandler,
bestehend aus einem Tiefsetzsteller mit nachgeschaltetem
Gegentaktwandler vorgesehen. Zur Bildung des Bord-Batterieladegerätes wird dieser Tiefsetzsteller dem Hochsetzsteller nachgeschaltet, wobei beide Steller an einem

510/83 2 0116925

gemeinsamen Kondensator liegen.

Der Erfindung liegt davon ausgehend die Aufgabe zugrunde, ein Bord-Batterie-Ladegerät der eingangs genannten Art anzugeben, das keine Netzrückwirkungen auf das speisende Wechselspannungsnetz verursacht und dabei trotzdem sehr wenig aufwendig herstellbar ist.

Diese Aufgabe wird durch die im Anspruch 1 gekennzeichneten Merkmale gelöst.

Die mit der Erfindung verbundenen Vorteile liegen insbesondere darin, daß das Bord-Batterieladegerät einen sinusförmigen Strom mit einem Leistungsfaktor von 1 wie eine rein ohmsche Last aus dem speisenden Netz entnimmt. Die Blindleistungs- und Oberschwingungsbelastung des Wechselstromnetzes ist dadurch auch bei einer größeren Verbreitung von Elektro-Kraftfahrzeugen, deren Hauptbatterien aus einem Netz zu laden sind, sehr niedrig. Trotzdem ist der Aufwand an Induktivitäten, Kapazitäten und Halbleitern beim Ladegerät minimal. Insbesondere können auch die zum Anschluß des Batterieladegerätes erforderlichen Filter sehr gering dimensioniert werden.

Ferner kann der Wechselrichter vorteilhaft nicht nur zum Aufladen der Hauptbatterie aus dem Netz während der Betriebsruhe, sondern auch zur Versorgung eines Niedervolt-Bordnetzes mit Hilfsbatterie aus der Hauptbatterie während der Fahrt dienen.

Vorteilhafte Ausgestaltungen der Erfindung sind in den Unteransprüchen gekennzeichnet.

Die Erfindung wird nachstehend anhand der in den Zeichnungen dargestellten Ausführungsformen erläutert.

Es zeigen:

Fig. 1     das Bord-Batterieladegerät,

Fig. 2     das um Spar- und Trenntransformator erweiterte Ladegerät,

Fig. 3     die zeitlichen Verläufe der interessierenden Größen.

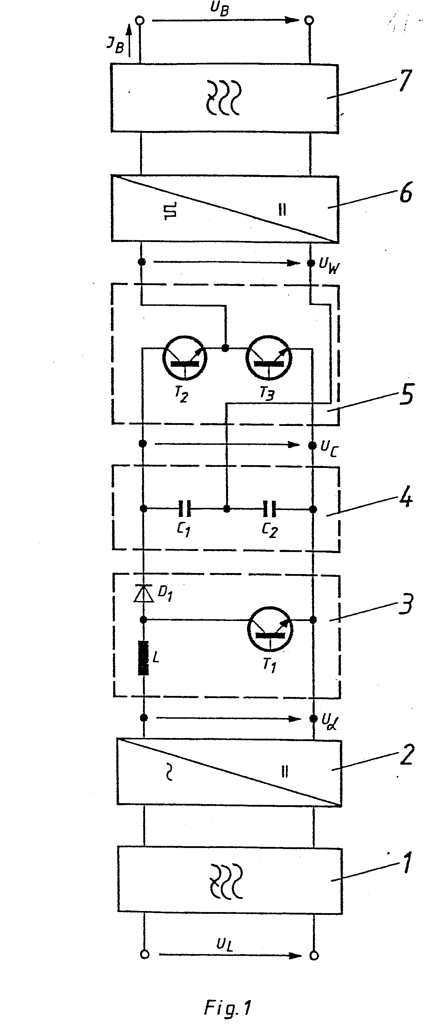

In Fig. 1 ist das erfindungsgemäße Bord-Batterieladegerät dargestellt. Ein Hochfrequenzfilter 1 wird eingangsseitig mit der sinusförmigen Netzwechselspannung $u_L$ des speisenden Netzes (Scheitelwert der Netzwechselspannung $\hat{u}_L$) beaufschlagt und versorgt ausgangsseitig einen Netzgleichrichter in Brückenschaltung 2. Der Netzgleichrichter 2 ist ausgangsseitig mit einem Hochsetzgleichstromsteller 3 verbunden.

Ein derartiger Hochsetzgleichstromsteller 3 ist beispielsweise aus Heumann/Stumpe, "Thyristoren", Teubner-Verlag, Stuttgart, 1974, Seite 147, Bild 147.1b bekannt und besitzt eine eingangsseitig angeordnete Drosselspule L, eine im Zuge des gleichen Pols ausgangsseitig liegende Diode $D_1$ und einen zwischen dem gemeinsamen Drossel/Dioden-Anschluß sowie dem weiteren Pol angeordneten steuerbaren Halbleiterschalter, im Ausführungsbeispiel einen Leistungstransistor $T_1$. Anstelle des Leistungstransistors $T_1$ ist auch ein Thyristor einsetzbar. Die Eingangsgleichspannung des Stellers 3 ist mit $U_d$ bezeichnet.

Ausgangsseitig ist der Hochsetzgleichstromsteller 3 mit einem kapazitiven Zwischenspeicher 4 beschaltet. Dieser Zwischenspeicher 4 besteht im Ausführungsbeispiel aus zwei in Serie liegenden Kondensatoren $C_1$ und $C_2$, deren gemeinsamer Verbindungspunkt eine Mittelanzapfung bildet. Die beiden äußeren Kondensatoranschlüsse sind mit den Eingangsklemmen eines Wechselrichters in Halbbrückenschaltung 5 verbunden. Die zwischen den äußeren Kondensatoranschlüssen liegende Kondensatorspannung ist mit $U_C$ bezeichnet.

Der Wechselrichter 5 besteht aus zwei Leistungstransistoren $T_2$ und $T_3$, wobei der gemeinsame Verbindungspunkt zwischen dem Emitter des Transistors $T_2$ und dem Kollektor des Transistors $T_3$ den einen ausgangsseitigen Pol zum Anschluß an einen Batteriegleichrichter in Brückenschaltung 6 bildet. Der Kollektor des Transistors $T_2$ bzw. der Emitter des Transistors $T_3$ sind mit den beiden äußeren Kondensatoranschlüssen des Speichers 4 verbunden, während die Mittelanzapfung des kapazitiven Speichers 4 direkt an den Batteriegleichrichter 6 angeschlossen ist. Die am Batteriegleichrichter 6 eingangsseitig anliegende Wechselrichterspannung ist mit $U_W$ bezeichnet. Anstelle der Leistungstransistoren sind andere schnellschaltende Halbleiterbauelemente einsetzbar.

Der Batteriegleichrichter 6 ist ausgangsseitig über ein Hochfrequenzfilter 7 mit der Hauptbatterie des Elektrospeicher-Straßenfahrzeuges verbunden. Die am Ausgang des Gleichrichters 6 abgreifbare Batteriespannung ist mit $U_B$, der Batteriestrom mit $I_B$ bezeichnet.

Das in Fig. 1 dargestellte Ladegerät eignet sich vorteilhaft zur Durchführung einer ersten Betriebsart "Laden der Hauptbatterie aus einem Wechselspannungsnetz bei Fahrzeugstillstand".

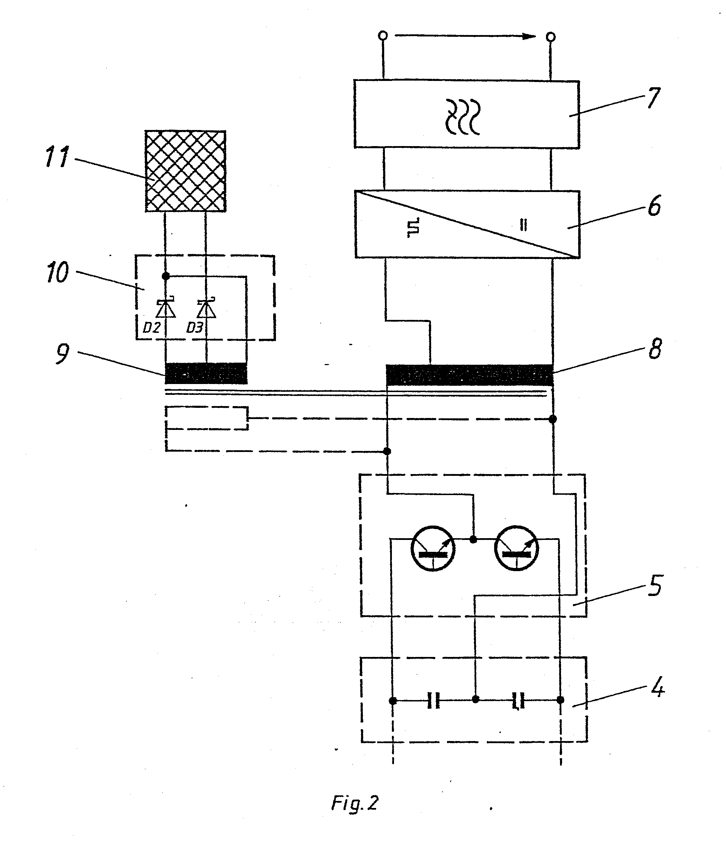

In Fig. 2 ist ein um einen Spar- und einen Trenntransformator erweitertes Bord-Batterieladegerät dargestellt. Der Wechselrichter 5 ist dabei nicht direkt, sondern über einen Spartransformator mit Wicklung 8 mit dem Batteriegleichrichter 6 verbunden. Der Spartransformator mit Wicklung 8 dient zur Ánpassung des Ladegerätes an

verschiedene Batteriespannungen $U_B$ bzw. zur Anpassung an unterschiedliche Netzwechselspannungen $u_L$.

Auf dem gleichen Eisenkern des Spartransformators kann eine weitere Sekundärwicklung 9 mit Mittelanzapfung zur Bildung eines Trenntransformators angeordnet sein. Die beiden äußeren Anschlüsse dieser Sekundärwicklung 9 sind über die Dioden $D_2$, $D_3$ miteinander verbunden und bilden den ersten Pol zur Speisung eines Fahrzeug-Bordnetzes 11 (Hilfsnetz) mit niedrigerer Spannung als der Batteriespannung $U_B$. Der weitere Pol des Bordnetzes 11 liegt an der Mittelanzapfung der Sekundärwicklung 9.

Das Fahrzeug-Bordnetz 11 (z.B. 12 V Spannung) wird während der Fahrt aus der Hauptbatterie über den Wechselrichter 5 und den Transformator gespeist, wobei gleichzeitig eine Hilfsbatterie dieses Bordnetzes 11 ladbar ist. Zur Durchführung dieser zweiten Betriebsart "Versorgen des Bordnetzes aus der Hauptbatterie" während der Fahrt", wird die Hauptbatterie direkt oder über die Eingangsglieder 1 und 2 mit dem Eingang des Hochsetzgleichstromstellers 3 verbunden.

Der vom Wechselrichter 5 gespeiste Transformator bildet also mit der Wicklung 8 einen Spartransformator für die Hauptaufgabe "Laden der Fahrbatterie aus dem Netz bei Fahrzeugstillstand" mit z.B. 3 kW Leistungsdurchsatz. Die Sekundärwicklung 9 bleibt dabei unbelastet. Während der Fahrt wird der Batteriegleichrichter 6 abgeschaltet. Der Transformator kann dann als Trenntransformator mit der Sekundärwicklung 9 über den Gleichrichter 10 das Bordnetz 11 speisen, z.B. mit 1 kW Leistung bei 12 V. Die Kombination aus Spar- und Trenntransformator kann alternativ hierzu auch in zwei getrennte Transformatoren aufgeteilt werden, wie in Fig. 2 gestrichelt angedeutet ist.

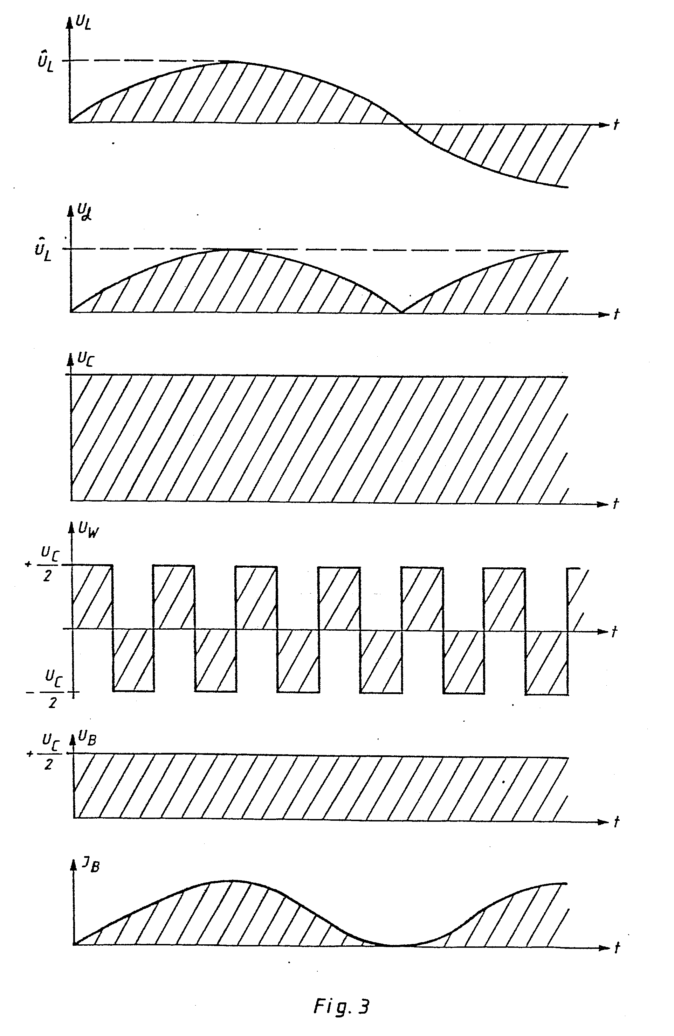

In Fig. 3 sind die zeitlichen Verläufe der interessierenden Spannungen, wie Netzwechselspannung $U_L$, Eingangsgleichspannung $U_d$, Kondensatorspannung $U_C$, Wechselrichterspannung $U_W$ und Batteriespannung $U_B$ sowie des Batteriestromes $I_A$ dargestellt. Die Eingangsgleichspannung $U_d$ für den Hochsetzgleichstromsteller 3 entsteht durch Gleichrichtung der Netzwechselspannung $U_L$. Die Kondensatorspannung $U_C$ ist mindestens genauso groß, vorzugsweise jedoch größer als der Scheitelwert $\hat{U}_L$ der Netzwechselspannung und im Idealfall gerade doppelt so groß wie die Batteriespannung $U_B$.

Diese Forderungen ergeben bei 220 V Netzspannung und 10% Toleranzzugabe eine minimale Kondensatorspannung von $U_C$ = 342V. Die Batteriespannung $U_B$ beträgt in diesem Fall 171V, was als günstige Entladeschlußspannung einer großen Fahrbatterie für Elektroautos angesehen werden kann.

Die genannte Spannungshalbierung wird durch den im Gegentakt mit hoher Schaltfrequenz betriebenen Wechselrichter in Halbbrückenschaltung 5, ergänzt durch den Batteriegleichrichter 6 erzielt. Der Wechselrichter 5 ist ungeregelt und arbeitet vorzugsweise mit 50% Einschaltdauer für jeden der beiden Transistoren $T_2$, $T_3$. Es ergibt sich somit eine rechteckförmige, von $+U_C/2$ nach $-U_C/2$ schwingende Wechselrichterspannung $U_W$, die vom Gleichrichter 6 in eine konstante Batteriespannung $U_B = +U_C/2$ umgewandelt wird.

Die Schwingfrequenz des Wechselrichters 5 ist dabei wesentlich höher als in der vereinfachten Darstellung nach Fig. 3 gezeigt.

A n s p r ü c h e

1. Bord-Batterieladegerät für ein Elektrospeicher-Straßenfahrzeug, bestehend aus der Reihenschaltung eines Netzgleichrichters in Brückenschaltung, eines Hochsetzgleichstromstellers und eines kapazitiven Zwischenspeichers, dadurch gekennzeichnet, daß der kapazitive Zwischenspeicher (4) über einen Wechselrichter in Halbbrückenschaltung (5) und einen nachgeschalteten Batteriegleichrichter in Brückenschaltung (6) mit der Hauptbatterie des Fahrzeuges verbindbar ist.

2. Bord-Batterieladegerät nach Anspruch 1, dadurch gekennzeichnet, daß der kapazitive Zwischenspeicher (4) eine Mittelanzapfung aufweist.

3. Bord-Batterieladegerät nach Anspruch 2, dadurch gekennzeichnet, daß der Wechselrichter (5) zwei im Gegentakt mit hoher Frequenz betriebene Leistungstransistoren ($T_2, T_3$) aufweist.

4. Bord-Batterieladegerät nach Anspruch 3, dadurch gQYkennzeichnet, daß die Mittelanzapfung bzw. die beiden äußeren Anschlüsse des kapazitiven Zwischenspeichers (4) direkt mit dem Batteriegleichrichter (6) bzw. mit den jeweils ersten Hauptanschlüssen der Leistungstransistoren ($T_2, T_3$) und der gemeinsame Anschluß der jeweils zweiten Hauptanschlüsse der Leistungstransistoren ($T_2, T_3$) mit dem Batteriegleichrichter (6) verbunden sind.

5. Bord-Batterieladegerät nach einem der vorstehenden Ansprüche, dadurch gekennzeichnet, daß der Wechselrichter (5) über einen Spartransformator mit dem Batteriegleichrichter (6) verbunden ist.

6. Bord-Batterieladegerät nach einem der vorstehenden Ansprüche, dadurch gekennzeichnet, daß der Wechselrichter (5) über einen Trenntransformator mit nachgeschaltetem Gleichrichter (10) das Fahrzeug-Bordnetz (11) speist.

7. Bord-Batterieladegerät nach den Ansprüchen 5 und 6, dadurch gekennzeichnet, daß Spartransformator und Trenntransformator zusammengefaßt sind.

Fig.1

Fig.2

Fig. 3